# EUROPEAN PATENT SPECIFICATION

(11) **EP 0 946 108 B1**
(45) Date of publication and mention of the grant of the patent: **21.07.2004**
(21) Application number: 97948938.2
(22) Date of filing: 22.12.1997
(51) Int. Cl.: A23K 1/00, A23L 1/09

(54) **A METHOD FOR PRODUCING A FOOD ADDITIVE, FOOD ADDITIVE, AND THE USE OF IT**
VERFAHREN ZUR HERSTELLUNG EINES NAHRUNGSMITTELZUSATZES, NAHRUNGSMITTELZUSATZ UND DESSEN VERWENDUNG
PROCEDE POUR PRODUIRE UN ADDITIF ALIMENTAIRE, ADDITIF ALIMENTAIRE ET UTILISATION DE CET ADDITIF

(30) Priority: 23.12.1996 FI 965192
(43) Date of publication of application: 06.10.1999
(73) Proprietor: SUOMEN REHU OY, 00240 Helsinki (FI)
(72) Inventor: VUORENMAA, Juhani, FIN-33400 Tampere (FI); VIRKKI, Markku, FIN-02320 Espoo (FI); JUKOLA, Elias, FIN-00640 Helsinki (FI); LAUREUS, Marko, FIN-00530 Helsinki (FI); JATILA, Hanna, FIN-02460 Kantvik (FI); APAJALAHTI, Juha, FIN-00670 Helsinki (FI); NURMINEN Päivi, FIN-02430 Masala (FI)
(74) Representative: Papula, Antti
(86) International application number: PCT/FI1997/000831
(87) International publication number: WO 1998/027829

(56) References cited:
- EP-A- 0 549 478
- GB-A- 1 032 687
- GB-A- 1 569 300

## Description

The present invention relates to a procedure for preparing a food additive as defined in the preamble of claim 1. Moreover, the invention relates to a food additive, its use and a preparation containing the additive.

A balance of intestinal microbes is a condition for the health and well-being of animals and for their productivity. Disturbances of this balance appear as diarrhoea and other intestinal health problems and may even lead to death.

The commonest nutritional method used to avoid the effects of noxious microbes on the health of single-stomach animals is to add various antibiotic and chemotherapeutic substances inhibiting microbial growth to the fodder used to feed the animal. To maintain intestinal balance and to avoid the use of antibiotics, it is also possible to use fodders containing added probiotic products, such as various microbes, acids and yeasts.

Another method used to prevent intestinal diseases is to inhibit the adherence of noxious microbes on the wall of the intestine. A method used to achieve this is to add to the fodder mixtures various oligosaccharides, which adhere to the receptors on the intestinal wall or to microbial receptors, thus preventing noxious microbes from settling on the intestinal wall. Moreover, it has been established that certain oligosaccharides, e.g. fructo-oligosaccharides promote the growth of bifidomicrobes beneficial to animals.

A problem with the use of antibiotics is that it promotes the development of microbial strains immune to antibiotics and thus leads to health risks to humans. A problem with probiotic products is that they have a variable and generally low efficacy and are quite expensive to use. Likewise, a problem with fodders containing pure oligosaccharides is that they have a variable and generally low efficacy in preventing intestinal diseases. In addition, the price of pure oligosaccharides is high.

The object of the present invention is to eliminate the problems described above.

A specific object of the present invention is to disclose a procedure for preparing a food additive having an effect on intestinal microbes that promotes the health and/or growth of animals.

A further object of the invention is to disclose a food additive that makes it possible to reduce intestinal diseases in animals.

A further object of the invention is to disclose the use of a new additive prepared according to the present invention and a preparation containing such an additive.

As for the features characteristic of the invention, reference is made to the claims.

In the procedure of the invention for preparing a food additive, raw material containing oligosaccharides and/or polysaccharides is treated so that its cell structure is opened and the amount of free oligosaccharides and/or polysaccharides and/or the amount of oligosaccharides and/or polysaccharides on the surface of the cell structures are/is - increased, i.e. e.g. the cell structure breaks up, to release the oligosaccharides and/or polysaccharides for use to prevent intestinal diseases. This treatment can also be used to release said components.

The invention also discloses products prepared by the method of the invention, their use and preparations containing additives according to the claims.

In raw materials based on vegetable, animal and/or microbial products containing oligosaccharides and/or polysaccharides, the oligosaccharides and/or polysaccharides are fixedly bound to the cell walls and other insoluble structures in the raw material. Investigations carried out in conjunction with the present invention revealed that adding such raw material directly to fodder does not produce any favourable effects of oligosaccharides; the animal (and human) digestive system is generally unable to decompose e.g. the cell wall of a yeast cell and release the desired oligosaccharides and/or polysaccharides. It was further established in the investigations that by treating the raw materials so that the amount of free oligosaccharides and/or polysaccharides and/or the amount of oligosaccharides and/or polysaccharides on the surface of the cell structures are/is increased, e.g. the cell structure of the raw material breaks up, a product is obtained that, when given to an animal together with fodder, substantially reduces intestinal diseases in the animal.

The mechanism of action of the product obtained in preventing intestinal diseases has not been fully elucidated in the investigations carried out, so it is based on various assumptions. According to one model, using the products obtained by the present method in conjunction with fodders inhibits microbial adherence to the intestine, in other words, the oligosaccharides and/or polysaccharides and/or-other substances released in conjunction with the break-up of the cell structure of the raw material are assumed to act as analogues to the receptors of noxious microbes, such as E.coli, in the intestine and to inhibit the ability of the microbes to attach to the wall of the intestine.

According to another model, the products obtained via break-up of the raw material cell structure affect the growth of noxious microbes in both the small and the large intestines, in other words, beneficial intestinal microbes, such as lactic acid bacteria and bifidobacteria, are able to utilise the oligosaccharides and/or polysaccharides for their nutrition whereas noxious microbes, such as E.coli and salmonella, are not. This favours the growth of beneficial microbes at the expense of noxious ones.

According to a third model, the decomposition products obtained via hydrolytic treatment of the raw material are assumed to have an effect on the immune reaction of the animal, i.e. certain raw material components, e.g. saccharine structures containing phosphor in yeast may improve the animal's immune reaction, thereby inhibiting intestinal diseases.

Further, the components formed via hydrolytic treatment of the raw material may affect the adsorption of toxins; i.e. the components may bind and neutralise microbial toxins, thus inhibiting intestinal diseases. The assumed mechanisms of action described above may also work in combination, inhibiting intestinal diseases in animals.

The raw material used in the procedure of the invention is a yeast fungi, especially baking yeast, brewing yeast and/or feeding yeast, such as *Saccharomyces cerevisiae, Kluyveromyces sp* or *Candida* utilis and other yeast fungi that can be produced.

In the yeast raw material used, the oligosaccharides and/or polysaccharides are bound to the cell structures of the raw material. Oligo- and polysaccharides can be released from the raw material by breaking up the cell structure of the raw material hydrolytically using an acid. Acids usable in the hydrolysis are e.g. ordinary mineral acids, such as hydrochloric acid, sulphuric acid, phosphoric acid, nitric acid, etc., as well as strong organic acids, such as formic acid, acetic acid, propionic acid, etc. The pH range used in acid hydrolysis may be below 4, e.g. about 2.

The degree of hydrolysation is e.g. of the order of 50 %, e.g. 60 - 20 w-%, preferably 55 - 25 w-%. When baking yeast is used as raw material, yeast extract may constitute e.g. about 46 w-% of the dry matter. Correspondingly, when brewing yeast is used, the proportion of extract is generally lower, e.g. of the order of about 28 w-%.

Both the soluble and the insoluble fraction obtained via hydrolysis contain certain amounts of the desired oligosaccharides and/or polysaccharides. On the one hand, the soluble fraction can generally be used e.g. in the production of a feed stuff or foodstuff; on the other hand, the soluble fraction can also be removed to be used for other purposes.

Hydrolytic decomposition of yeasts is described in the following patent specifications and applications: US 3 914 450, US 3 443 969, US 5 288 509, EP 299 078, JP 57-219695 and PCT/FI/96/00326. These and other prior-art methods can be used in conjunction with the present invention, the usable fraction being expressly the fraction containing oligosaccharides and/or polysaccharides or the non-fractionated product obtained as such. Thus, specification PCT/FI96/00326 describes the recovery of flavours, such as nucleotides, peptides and amino acids e.g. from brewing yeast and baking yeast, whereas in the present invention it is primarily the other components that are recovered, and, if desired, the flavours can be separated e.g. as described in the specification referred to. On the other hand, the separation of flavours can be omitted; in other words, part or all of the flavours can be included in the product prepared according to the invention.

Besides hydrolytic treatment, it is also possible to apply a treatment of the raw material with a detergent and/or a treatment that breaks up the cell structure of the raw material, e.g. by subjecting the cell structure to a mechanical, hydrostatic and/or pneumatic force, and/or to a heat treatment. Moreover, it is possible to use combinations of the above-mentioned methods, e.g. a treatment breaking up the cell and/or a heat treatment combined with an enzymatic or other hydrolytic treatment. If desired, the product obtained via hydrolytic treatment and/or via a treatment breaking up the cell and/or via heat treatment can be treated with a detergent to wash it.

If desired, the food additive produced according to the invention can be processed further, e.g. by fractionating or concentrating the saccharide structures obtained in the treatment. The further treatment, such as fractionation or concentration, can be implemented by any method known in itself. The fractionated and/or concentrated products obtained can be used as such for fodder or food, or they can be mixed with feed stuffs and/or foodstuffs known in themselves.

The product prepared by the method of the invention can be added to a fodder or foodstuff as such, moisturised or dried, and it can generally be treated as desired.

The food additive prepared by the method of the invention can be used in fodders for single-stomach animals, e.g. pigs, poultry, calves, fur animals such as foxes and minks, pets such as dogs and cats, horses, especially foals, and so on, to prevent intestinal diseases. The food additive can be used in fodders/foods for single-stomach animals in amounts of approx. 0.05 - 1.5 w-%, preferably about 0.1 - 1 w-% of the total amount of fodder, calculated in terms of dry matter and depending on the degree of hydrolysation; the percentages have been calculated based on a degree of hydrolysation of 50 %; the percentages depend on the degree of hydrolysation. The additive can be used together with fodder/food or as such. The additive is preferably so used that the amount of additive used is 0.1 - 0.6 g/kg, calculated from the daily ration of foodstuff and/or feed stuff in terms of dry matter per kilogram of the animal's living weight.

The additive prepared by the method of the invention, when added to fodder intended for animals, effectively inhibits the growth of harmful microorganisms and promotes the growth of beneficial microbes. At the same time, the growth of the animals, utilisation of fodder and the overall economy of production are improved. Further, the environmental emissions caused by the production are reduced because the animal is able to utilise the fodder more effectively. In addition, the use of the products of the invention, i.e. organic feed products, in the fodder for animals makes it possible to stop using antibiotics in fodder. The risk for the development of microbial strains immune to antibiotics is reduced and the health risks they cause for humans are also reduced.

In the following, the invention will be described in detail by the aid of embodiment examples by referring to the attached drawings, in which

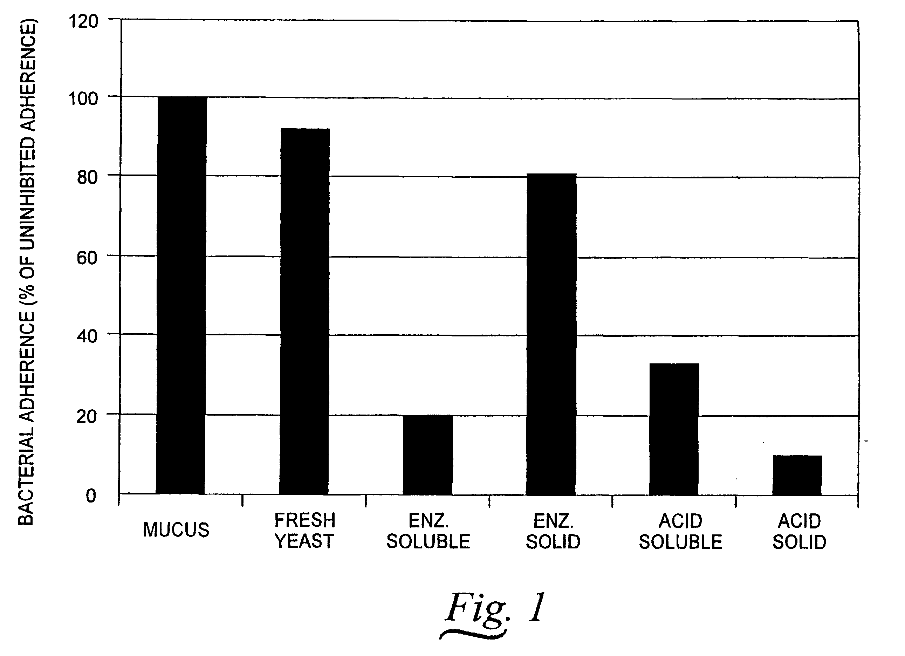

Fig. 1 illustrates the adherence of bacteria in the mucus of an intestine treated using products prepared from yeast by the method of the invention.

### EXAMPLE 1

In a laboratory test, food additive according to the invention was prepared from baking yeast (PCT/FI96/00326). In the test, the effect of a processed yeast fraction on the adherence of E.coli bacteria to the mucous membranes in the intestine of a pig was tested using micro-titre plates; the test is described in the publication Conway, P.L., (1990) Infection and Immunity, 58, 3178-3182. Presence of K88-specific receptors in porcine ileal mucus is age dependent.

It was established that the additive of the invention in a 1-% solution inhibits microbial adherence by 70-90 %, depending on the coli strain. The results are shown in Table 1.

**Table 1**

| E.coli strains | Inhibition |
|---|---|
| strain 1 | 77 % |
| strain 2 | 83 % |
| strain 3 | 70 % |
| strain 4 | 82 % |
| strain 5 | 74 % |
| strain 6 | 90 % |
| strain 7 | 80 % |

### EXAMPLE 2

In this test, four equal groups of pigs were fed with the following fodders:
Group 1: basic fodder (reference)
Group 2: basic fodder + 40 ppm Avilamysine
Group 3: basic fodder + product according to the invention, prepared from yeast, in an amount of 0.5 w-% (of dry matter)
Group 4: basic fodder + product according to the invention, prepared from yeast, in an amount of 1.0 w-% (of dry matter).

The results are shown in Table 5.

**Table 5.**

| Effect of yeast addition on development of piglets | | | | |
|---|---|---|---|---|
| Group | 1 | 2 | 3 | 4 |
| Yeast % | 0 | 0 | 0.5 | 1.0 |
| Avilamysine | - | + | - | - |
| | | | | |
| Piglets | 72 | 72 | 72 | 72 |
| Starting weight, kg | 9.5 | 10.6 | 10.7 | 9.0 |
| Final weight, kg | 23.0 | 24.1 | 24.2 | 22.4 |
| ADG, g/d | 456 | 502 | 512 | 433 |
| FCR kg fodder/kg | 1.97 | 1.81 | 1.77 | 1.96 |

### Weight increase

The analysed fodder composition did not differ from the calculated composition for any one of the groups. Both Avilamysine and the 0.5 w-% addition of yeast preparation increased the growth and fodder consumption effectively as compared with the reference group (group 1, Table 5). The yeast preparation and Avilamysine were substantially equal in effectiveness. The 1 w-% addition of yeast preparation had a slightly negative effect on the growth of the piglets; it clearly reduced the fodder consumption, which may have been the cause for the lower result. The test result indicates that the amount of the product of the invention in fodder/foodstuff may preferably be under 1 w-%, e.g. up to 0.9 w-%. - The use of yeast, e.g. brewing yeast as protein raw material, in fodders is known in prior art. The amounts of yeast used are 2-10 w-% of the fodder, and yeast has been used to replace other protein raw materials, such as crushed soy, without any harmful effects on growth.

### EXAMPLE 3

An amount of a product according to the invention, obtained from baking yeast, was added to the fodder of growing piglets. The fodder for the reference group contained Olaqvindox chemotherapeutic substance, 50 mg/kg. In the fodder for the yeast group, instead of Olaqvindox, yeast fraction according to the invention was added in an amount of 0.5 %. The results are shown in Table 6.

The yeast fraction addition clearly reduced diarrhoea in the piglets; the average diarrhoea index was 1.5 for the yeast group and 2.5 for the Olaqvindox group. In addition, 100 % of the farrows in the Olaqvindox group had to be treated with an antibiotic or with zinc oxide because of diarrhoea. For the yeast group, the corresponding need was 12.5 %.

**Table 6**

| Group | Olaqvindox 50 ppm | Yeast fraction 0.5 % |
|---|---|---|
| Pigs | 79 | 87 |
| Initial weight, kg | 7.10 | 7.50 |
| Final weight, kg | 12.47 | 12.96 |
| Additional growth, g/day | 255 | 261 |
| Fodder efficiency kg/kg | 1.61 | 1.60 |
| Diarrhoea index | 2.5 | 1.5 |
| Treatments for diarrhoea, % of farrows | 100 | 12.5 |
| Diarrhoea index graduation: 1 = normal faeces, 2 = loose faeces, 3=watery diarrhoea | | |

### EXAMPLE 4

An amount of a product according to the invention, obtained from baking yeast, was added to the fodder of growing pigs. The measurement was implemented as in the preceding example. The results are shown in Table 7.

**Table 7**

| Group | Olaqvindox 50 ppm | Yeast fraction 0.5 % |
|---|---|---|
| Number of pigs | 150 | 140 |
| Initial weight, kg | 21.7 | 21.3 |
| Test days, d | 33 | 33 |
| Additional growth, g/day | 777^{a} | 847^{a} |
| Fodder efficiency kg/kg | 2.07 | 1.87 |

### EXAMPLE 5

An amount of a product according to the invention, obtained from baking yeast, was added to the fodder of growing piglets to investigate its effect on the growth and health of piglets and on fodder utilisation. Each test group comprised 6x4 piglets. The test groups were divided as shown in Table 8.

**Table 8.**

| Additive | 0 | Olaqvindox 50 ppm | Avilamysine 40 ppm |
|---|---|---|---|
| Yeast fraction | + - | + - | + - |

In the fodder for the yeast groups, additive, i.e. yeast fraction, prepared from yeast by the method of the invention was added in an amount of 0.5 %. The results are shown in Table 9.

The addition of yeast fraction somewhat improved the growth of the piglets and the fodder utilisation (Table 9). The effect of yeast is particularly evident in the case of fodders without additives, in which the addition of the yeast fraction increased pig growth to the same level as for fodders with additives.

**Table 9.**

| Effect of yeast fraction on the growth of piglets and fodder utilisation | | | | |
|---|---|---|---|---|
| Addition of yeast fraction | - | + | no additive - | no additive + |
| Number of piglets | 72 | 72 | 24 | 24 |
| Initial weight, kg | 13.42 | 13.62 | 13.50 | 13.50 |
| Final weight, kg | 23.73 | 24.80 | 22.38 | 24.55 |
| Additional growth, g/day | 493 | 535 | 429^{a} | 526^{b} |
| Fodder efficiency, kg of fodder/kg of additional growth | 1.94 | 1.73 | 2.16 | 1.78 |
| a,b (p<0.05) | | | | |

### EXAMPLE 6

In this test, yeast fractions were prepared for microbiological tests. The raw materials used were baking yeast and brewing yeast, which were treated with an acid, enzymatically or autolysed with salt.

In the acid hydrolysis, the pH of the yeast suspensions was maintained at the value 4.0 by using a strong HCl solution (10 h), and the temperature was maintained at 60°C. The next day, the pH was lowered to the value 2.0 (11 h). Finally, the temperature was raised to 68°C (12 h). The reaction mixture obtained was neutralised (pH 6.2) and centrifuged (4000 rpm, 20 min). From the soluble (supernatant) fraction and the cell residue, the dry matter content and adhesion were determined as in Example 1. Table 10 presents the dry matter content values.

In the enzymatic hydrolysis (not according to the invention), the yeast suspensions were subjected to a heat treatment (95 °C for about 10 min.), whereupon they were transferred into a fermentor, pH 5.8, temperature 65°C. The proteolytic enzyme used was papain (Promod 144 L). In the final enzymatic treatment with ribonuclease, the nucleotides of RNA were split and deamizyme GMP was converted into IMP. The reaction mixtures were centrifuged (4000 rpm, 20 min) . From the soluble fraction and the cell residue, the dry matter content and adhesion were determined as described above. The dry matter content values are presented in Table 10.

In the autolysis, (not according to the invention) the yeast was autolysed in a fermentor, temperature 50°C, with 0.5 % NaCl added, mixing speed 100 rpm and reaction time 24 h. The reaction mixture was centrifuged (4000 rpm, 20 min). From the soluble fraction and the cell residue, the dry matter content and adhesion were determined as described above. The dry matter content values are presented in Table 10.

The brewing yeast used in this example was processed in the same way as the baking yeast (above) except that it was centrifuged (4000 rpm, 20 min.) before the processing to remove most of the soluble beer components from it. After this, hydrolyses and autolysis were carried out as described above.

**Table 10.**

| Sample | Dry matter, w-% |
|---|---|
| Brewing yeast | 12.0 |
| Baking yeast | 19.3 |
| Brewing yeast | 19.0 |
| Baking yeast, Autol., supern. | 19.3 |
| Brewing yeast, Autol., supern. | 9.4 |
| Brewing yeast, Autol., total fraction | 20.9 |
| Baking yeast, Autol., total fraction | 18.1 |
| Brewing yeast, Autol., cells | 25.7 |
| Baking yeast, Autol., cells | 30.0 |
| Baking yeast, Acid hydr., total fraction | 17.8 |
| Brewing yeast, Acid hydr., total fraction | 18.7 |
| Baking yeast, Acid hydr., cells | 32.7 |
| Brewing yeast, Acid hydr., cells | 24.4 |
| Brewing yeast, Acid hydr., supern. | 19.1 |
| Baking yeast, Acid hydr., supern. | 10.9 |
| Baking yeast, Enz., cells | 20.3 |
| Brewing yeast, Enz., cells | 18.5 |
| Baking yeast, Enz., supern. | 14.4 |
| Brewing yeast, Enz., supern. | 10.6 |

When the dry matter content (supernatant) of the yeast extracts is considered, it can be seen that, in a comparison of different process types, the dry matter content of the enzymatically treated extract fractions is the highest dry matter content value. Thus, it can be assumed that the dry matter yield into yeast extract is highest in the process in question and, conversely, that the dry matter yield in the cell fraction is lowest. In each hydrolysis, the extracts produced from baking yeast had a higher dry matter content than brewing yeast (the source material dry matter content, too, was by 0.5 % higher for baking yeast than for brewing yeast). There was no significant difference between the autolysate and the acid-hydrolysed extract fraction. The dry matter content values for the cell fractions corresponding to yeast extract confirm the dry matter distribution of the enzymatically treated fractions to be in line with what could be concluded about the dry matter content of yeast extract, in other words, the dry matter content values of the cell residue were correspondingly all lowest in the enzymatic process.

When the dry matter distribution is calculated from the extract (supernatant), which does not fully reflect the situation as the cell residue still contains some soluble dry matter not extracted, about 46 % of the dry matter in the dry matter distribution of the enzymatic process was in the yeast extract when baking yeast was being processed. The corresponding value for brewing yeast was about 28 %. Accordingly, the extract yield will be about 50 % of the total dry matter. The yield values for brewing yeast were clearly lower.

In acid hydrolysis the extract yield with baking yeast was about 44 % of the dry matter and in autolysis about 34 % of the dry matter. For brewing yeast, the corresponding figures were about 32 % (acid) and about 38 % (autolysis).

### EXAMPLE 7

A laboratory test was carried out to establish the ability of processed baking yeast fractions to inhibit the adherence of E.coli K88 bacteria to the mucus in a pig's small intestine. The test procedure is described in Example 1. In this procedure, the wells in a micro-titre plate are covered with mucus isolated from a pig's intestine. Radioactively branded bacteria are added onto the mucus either as such or together with the substance under examination. The bacteria are incubated in the micro-titre wells and non-adhering bacteria are washed away. The adhering bacteria are loosened using a detergent and their number is calculated based on their radioactivity.

Yeast was hydrolysed with enzyme (not according to the invention) and hydrochloric acid. The enzyme used in the enzymatic hydrolysis was papain (Promod 144 L), pH 5.8., temperature 65 °C. In the final enzymatic treatment with ribonuclease, the nucleotides of RNA were split and deamizyne GMP was converted into IMP. The reaction mixtures were centrifuged (1400 rpm, 20 min). About 48 % of the dry matter was in the yeast extract.

In the acid hydrolysis, pH 2, temperature 68 °C, the reaction mixture was centrifuged (4000 rpm, 20 min), total extract yield about 50 % of total dry matter.

In this test, fresh baking yeast and processed and spray-dried baking yeast fractions were used as adherence inhibitors: soluble and solid fraction of enzymatically decomposed yeast, soluble and solid fraction of acid-hydrolysed yeast. The concentration of all yeast fractions and fresh yeast in the reaction mixture in the test was 0.16 % (dry matter). The results are shown in Fig. 1. For a bacteria added without yeast fraction, the adherence to the mucus is represented by the value 100 %.

## Claims

1. Procedure for preparing a feed additive, to be used for the prevention of gastric disorders and intestinal diseases and/or for the promotion of growth, **characterised in that** a yeast raw material is treated hydrolytically with an acid so that the cell wall structure is opened and the amount of free oligosaccharides and/or polysaccharides and/or the amount of oligosaccharides and/or polysaccharides on the surface of the cell wall are/is increased.

2. Procedure as defined in claim 1, **characterised in that** the product obtained in the hydrolysis is used as such non-fractionated.

3. Procedure as defined in claim 1 or 2, **characterised in that** the raw material is treated mechanically, hydrostatically or pneumatically and/or with heat so that the cell structure is broken up.

4. Procedure as defined in any one of claims 1 - 3, **characterised in that** the product obtained is treated with a detergent.

5. Procedure as defined in any one of claims 1 - 4, **characterised in that** the raw material is baking yeast, brewing yeast and/or feeding yeast.

6. Procedure as defined in any one of claims 1 - 5, **characterised in that** the oligosaccharide and/or polysaccharide product obtained is added to feed in an amount of 0.05 - 1.5 w-%, calculated in terms of dry matter.

7. Procedure as defined in claim 6, **characterised in that** that the oligosaccharide and/or polysaccharide product obtained is added to feed in an amounc of 0.1 - 1 w-%, calculated in terms of dry matter.

8. Feed additive for the prevention of intestinal diseases and/or promotion of growth, **characterised in that** the additive has been prepared by hydrolytically treating a yeast raw material with an acid so that the cell wall structure is opened and the amount of free oligosaccharides and/or polysaccharides and/or the amount of oligosaccharides and/or polysaccharides on the surface of the cell wall are/is increased.

9. Additive as defined in claim 8, **characterized in that** the additive comprises the non-fractionated product obtained as such.

10. Additive as defined in claim 8 or 9, **characterised in that** the raw material has been treated mechanically, hydrostatically or pneumatically and/or with heat so that the cell structure has been broken up.

11. Additive as defined in any one of claims 8 - 10, **characterised in that** the product obtained has been treated with a detergent.

12. Feed additive as defined in any one of claims 8 - 11 for use in conjunction with feed for animals for the prevention of gastric disorders and intestinal diseases and/or for the promotion of growth.

13. Use of an additive as defined in claim 12 for the preparation of a feed for animals for the prevention of gastric disorders and intestinal diseases, and/or for the promotion of growth, **characterised in that** the amount of additive used is 0.05 - 1.5 w-% of the amount of the feed.

14. Preparation containing a feed additive, designed for the prevention of intestinal diseases and/or for the promotion of growth and intended to be given to an animal to be fed, **characterised in that** the preparation contains a preparation according to any one of claims 8 - 11 in an amount of 0.01 - 0.6 g/kg, calculated from the daily ration of feed stuff as dry matter per kilogram of living weight.

15. Preparation as defined in claim 14, **characterised in that** the amount of additive contained in the preparation is 0.05 - 1.5 w-% of the daily ration of feed stuff.

## Patentansprüche

1. Ein Verfahren zum Herstellen von einem Futtermittelzusatz zur Verwendung für die Verhütung von Magen- und Darmerkrankungen und/oder für die Förderung des Wachstums, **dadurch gekennzeichnet, dass** ein Rohmaterial aus Hefe hydrolytisch so mit einer Säure behandelt wird, dass sich die Zellwandstruktur öffnet, und die Menge an freien Oligosacchariden und/oder Polysacchariden und/oder die Menge an Oligosacchariden und/oder Polysacchariden auf der Oberfläche der Zellwand zunimmt.

2. Ein Verfahren gemäß Anspruch 1, **dadurch gekennzeichnet, dass** das bei der Hydrolyse erhaltene Produkt als solches in nicht-fraktionierter Form verwendet wird.

3. Ein Verfahren gemäß einem der Ansprüche 1 oder 2, **dadurch gekennzeichnet, dass** das Rohmaterial mechanisch, hydrostatisch oder pneumatisch und/oder mit Hitze behandelt wird, so dass die Zellstruktur aufgebrochen wird.

4. Ein Verfahren gemäß einem der Ansprüche 1-3, **dadurch gekennzeichnet, dass** das erhaltene Produkt mit einem Detergenz behandelt wird.

5. Ein Verfahren gemäß einem der Ansprüche 1-4, **dadurch gekennzeichnet, dass** das Rohmaterial Bäckerhefe, Brauereihefe und/oder Futterhefe ist.

6. Ein Verfahren gemäß einem der Ansprüche 1-5, **dadurch gekennzeichnet, dass** das erhaltene Oligosaccharid- und/oder Polysaccharidprodukt zu Futtermittel in einer Menge von 0,05 - 1,5 Gew.-%, bezogen auf die Trockenmasse, zugefügt wird.

7. Ein Verfahren gemäß Anspruch 6, **dadurch gekennzeichnet, dass** das erhaltene Oligosaccharid- und/oder Polysaccharidprodukt zu Futtermittel in einer Menge von 0,1 bis 1 Gew.-%, bezogen auf das Trockengewicht, zugefügt wird.

8. Ein Futtermittelzusatz zur Verhütung von Darmerkrankungen und/oder Förderung des Wachstums, **dadurch gekennzeichnet, dass** der Zusatz hergestellt wird, indem ein Rohmaterial aus Hefe hydrolytisch so mit einer Säure behandelt wird, dass sich die Zellwandstruktur öffnet, und die Menge an freien Oligosacchariden und/oder Polysacchariden und/oder die Menge an Oligosacchariden und/oder Polysacchariden auf der Oberfläche der Zellwand zunimmt.

9. Ein Zusatz gemäß Anspruch 8, **dadurch gekennzeichnet, dass** der Zusatz das nicht-fraktionierte Produkt, als solches erhalten, enthält.

10. Ein Zusatz gemäß einem der Ansprüche 8 oder 9, **dadurch gekennzeichnet, dass** das Rohmaterial mechanisch, hydrostatisch oder pneumatisch und/oder mit Hitze behandelt wurde, so dass die Zellstruktur aufgebrochen wird.

11. Ein Zusatz gemäß einem der Ansprüche 8-10, **dadurch gekennzeichnet, dass** das erhaltene Produkt mit einem Detergenz behandelt wird.

12. Ein Futtermittelzusatz gemäß einem der Ansprüche 8-11 zur Verwendung im Zusammenhang mit Tierfutter zur Vorbeugung vor Magen- und Darmerkrankungen und/oder für die Förderung des Wachstums.

13. Die Verwendung eines Zusatzes gemäß Anspruch 12 für die Herstellung eines Tierfutters zur Vorbeugung vor Magen- und Darmerkrankungen und/oder für die Förderung des Wachstums, **dadurch gekennzeichnet, dass** die Menge an verwendetem Zusatz 0,05 - 1,5 Gew.-%, bezogen auf die Menge des Futters.

14. Ein Präparat, das einen Futtermittelzusatz enthält, hergestellt zur Vorbeugung vor Darmerkrankungen und/oder für die Förderung des Wachstums, und das einem zu fütterndem Tier verabreicht werden soll, **dadurch gekennzeichnet, dass** das Präparat eine Zusammensetzung gemäß einem der Ansprüche 8-11 enthält, in einer Menge von 0,01 - 0,6 g/kg, berechnet aus der täglichen Futtermittelration und angegeben als Trockenmasse pro Kilogramm Lebendgewicht.

15. Ein Präparat gemäß Anspruch 14, **dadurch gekennzeichnet, dass** die Menge an Zusatz in dem Präparat 0,05 - 1,5 Gew.-% der täglichen Futtermittelration enthält.

## Revendications

1. Procédé de préparation d'un additif alimentaire, destiné à être utilisé pour la prévention de troubles gastriques et de maladies intestinales et/ou pour la promotion de la croissance, **caractérisé en ce qu'**une matière première à base de levure est traitée de façon hydrolytique avec un acide de sorte que la structure de la membrane cellulaire soit ouverte et que la quantité d'oligosaccharides et/ou de polysaccharides libres et/ou la quantité d'oligosaccharides et/ou de polysaccharides sur la surface de la membrane cellulaire soient/soit accrue(s).

2. Procédé selon la revendication 1, **caractérisé en ce que** le produit obtenu dans l'hydrolyse est utilisé en tant que tel, non fractionné.

3. Procédé selon la revendication 1 ou 2, **caractérisé en ce que** la matière première est traitée de façon mécanique, hydrostatique ou pneumatique et/ou avec de la chaleur, de sorte que la structure cellulaire soit fragmentée.

4. Procédé selon l'une quelconque des revendications 1 à 3, **caractérisé en ce que** le produit obtenu est traité avec un détersif.

5. Procédé selon l'une quelconque des revendications 1 à 4, **caractérisé en ce que** la matière première est de la levure de boulanger, de la levure de bière et/ou de la levure alimentaire.

6. Procédé selon l'une quelconque des revendications 1 à 5, **caractérisé en ce que** le produit obtenu à base d'oligosaccharide et/ou de polysaccharide est ajouté à la nourriture en une quantité de 0,05 à 1,5 % en poids, calculée en termes de matière sèche.

7. Procédé selon la revendication 6, **caractérisé en ce que** le produit obtenu à base d'oligosaccharide et/ou de polysaccharide est ajouté à la nourriture en une quantité de 0,1 à 1 % en poids, calculée en termes de matière sèche.

8. Additif alimentaire pour la prévention des maladies intestinales et/ou la promotion de la croissance, **caractérisé en ce que** l'additif a été préparé en traitant, de façon hydrolytique, une matière première à base de levure avec un acide, de sorte que la structure de la membrane cellulaire soit ouverte et que la quantité d'oligosaccharides et/ou de polysaccharides libres et/ou la quantité d'oligosaccharides et/ou de polysaccharides sur la surface de la membrane cellulaire soient/soit accrue(s).

9. Additif selon la revendication 8, **caractérisé en ce que** l'additif comprend le produit non fractionné, obtenu en tant que tel.

10. Additif selon la revendication 8 ou 9, **caractérisé en ce que** la matière première a été traitée de façon mécanique, hydrostatique ou pneumatique et/ou avec de la chaleur, de sorte que la structure de la membrane cellulaire ait été fragmentée.

11. Additif selon l'une quelconque des revendications 8 à 10, **caractérisé en ce que** le produit obtenu a été traité avec un détersif.

12. Additif alimentaire selon l'une quelconque des revendications 8 à 11, pour l'utilisation, conjointement avec l'alimentation pour animaux, pour la prévention des troubles gastriques et des maladies intestinales et/ou pour la promotion de la croissance.

13. Utilisation d'un additif selon la revendication 12, pour la préparation d'une alimentation pour animaux pour la prévention des troubles gastriques et des maladies intestinales et/ou pour la promotion de la croissance, **caractérisée en ce que** la quantité de l'additif utilisé est de 0,05 à 1,5 % en poids de l'alimentation.

14. Préparation contenant un additif alimentaire, conçue pour la prévention des maladies intestinales et/ou pour la promotion de la croissance, et prévue pour être donnée à un animal alimenté, **caractérisée en ce que** la préparation contient une préparation selon l'une quelconque des revendications 8 à 11, en une quantité de 0,01 à 0,6 g/kg, calculée à partir de la ration journalière des aliments pour animaux, en tant que matière sèche par kilogramme de biomasse.

15. Préparation selon la revendication 14, **caractérisée en ce que** la quantité de l'additif, contenue dans la préparation, est de 0,05 à 1,5 % en poids de la ration journalière des aliments pour animaux.
